# EUROPEAN PATENT SPECIFICATION

(11) **EP 3 423 355 B1**
(45) Date of publication and mention of the grant of the patent: **13.04.2022**
(21) Application number: 17760534.2
(22) Date of filing: 27.02.2017
(51) Int. Cl.: B64D 17/34, B64D 17/26, B64D 17/02

(54) **GLIDE MODULATOR SYSTEM AND METHOD FOR A RAM AIR PARACHUTE**
GLEITMODULATORSYSTEM UND VERFAHREN FÜR EINEN STAULUFTFALLSCHIRM
SYSTÈME DE MODULATEUR DE GLISSE ET PROCÉDÉ POUR UN PARACHUTE À AIR DYNAMIQUE

(30) Priority: 04.03.2016 US 201615061804
(43) Date of publication of application: 09.01.2019
(73) Proprietor: Airborne Systems NA Inc., Pennsauken, New Jersey 08109 (US)
(72) Inventor: BERLAND, Jean C., Wynnewood New Jersey 19096 (US)
(74) Representative: Abel & Imray LLP
(86) International application number: PCT/US2017/019627
(87) International publication number: WO 2017/151483

(56) References cited:
- EP-A2- 1 207 102
- EP-A2- 1 207 102
- FR-A- 585 513
- FR-A1- 2 731 202
- US-A- 2 973 928
- US-A- 3 285 546
- US-A- 3 412 963
- US-A- 3 524 613
- US-A- 3 589 654
- US-A- 5 029 777

## Description

### CROSS-REFERENCE TO RELATED APPLICATION

This application is entitled to and hereby claims the priority to co-pending U.S. non-provisional application Serial No. 15/061,804, filed March 4, 2016.

### BACKGROUND OF THE INVENTION

### Field of the Invention

The present invention is related to the field of parachutes and, more particularly, to ram air/parafoil parachutes for personnel or cargo.

### Description of the Related Art

Until recently, ram air parachutes had a glide ratio of less than 4:1. With the development of more efficient airfoil sections, higher aspect ratio (span/chord) canopies, and more refined wing planforms, the glide ratio has increased to up to 6:1 for parachutes and even up to 10:1 for ground launched paragliders. The increase in glide ratio allows greater flight distances from the same deployment altitude.

While increased glide ratios are often advantageous in the generally recreational field of paragliding where the pilot is flying a gliding aircraft and may want to remain aloft for a long period, there are conditions under which it is necessary for a paraglider to decrease the glide ratio and thus increase the rate of descent, such as to escape dangerous strong ascending currents. To this end, techniques have been developed in the field of paragliding to increase the rate of descent. Two of these techniques are known in the art as the "B-line stall" and the "big ears". Both of these techniques alter the glide ratio by reducing the lift and increasing the drag of the canopy.

The B-line stall technique consists of pulling down the risers connected to the entire second row of suspension lines (the B row). The effect is a major distortion of the airfoil section across the entire span of the paraglider canopy resulting in a loss of lift and, therefore, a significant increase in the rate of descent. As the distortion affects the entire span, the steering lines located at the trailing edge near the wing tips become ineffective and the pilot must thereafter control the heading of the paraglider by shifting his or her weight in the direction of the desired turn.

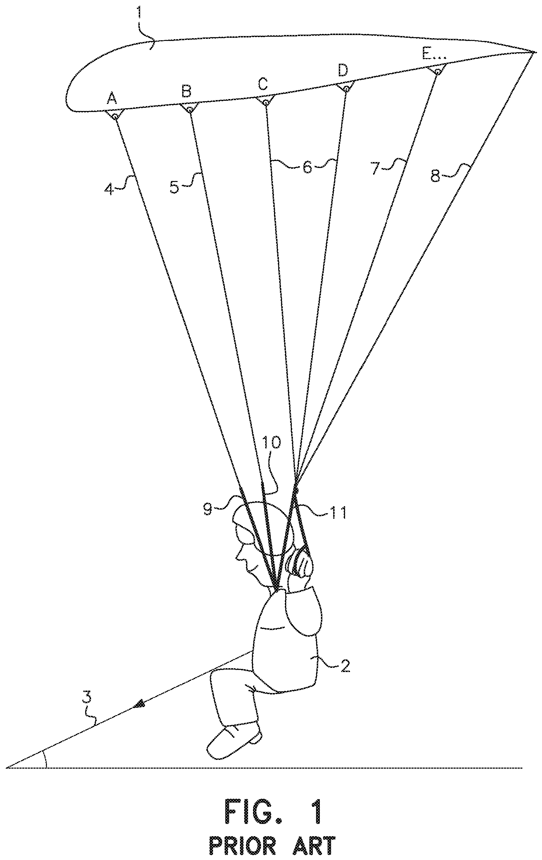

Figure 1 is a chordwise cross-sectional view of a paraglider. It depicts the paraglider 1 being flown by a pilot 2, flying along the nominal glide path 3 in a high glide ratio configuration. Figure 1 also shows the location of the different suspension line rows along the chord: front row 4 ("A") nearest the leading edge of the canopy or wing, median rows 5, 6 ("B", "C" and "D" respectively), rear row 7 ("E") and steering lines 8 on or adjacent the trailing edge. The risers 9, 10 and 11 that group the suspension lines are also shown.

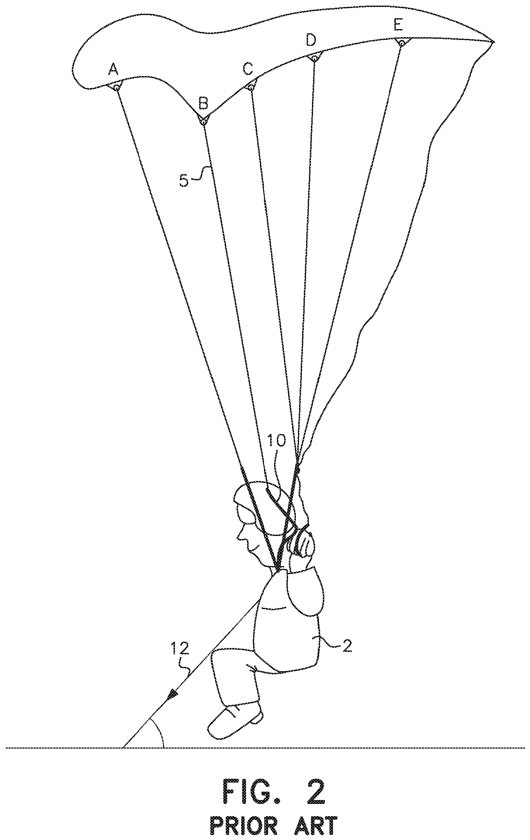

Figure 2 shows the distortion of the airfoil section that results from the pilot pulling on the B riser 10 connected to the B lines 5 to produce the B-line stall configuration. The disruption of the airflow along the top and bottom surfaces of the canopy reduces the lift and the paraglider flies at a much steeper glide slope 12. In the B-line stall configuration, the steering lines are ineffective at controlling the direction or heading of the paraglider.

A conventional paraglider wing in nominal flight is shown in Figure 3. As an alternative means of distorting the wing to reduce the glide slope, a "big ears" technique may be used. A "big ears" configuration, which is shown in Figures 4 and 5, is produced by pulling down the front row suspension lines at the wing tips 13 in order to fold the wing tips under the bottom surface of the wing, thereby reducing the span of the wing and hence the canopy surface area. The "big ears" technique significantly decreases the wing area and aspect ratio while increasing parasitic drag, causing the glide path to become much steeper. However, due to the folding of the wing tips, the steering lines become totally inoperative and the pilot must shift his or her weight in the harness to control the heading.

The control obtained through weight shifting, which is required after implementing either the B-line stall or the "big ears" technique, is very limited and therefore only possible in practice with paragliders which are very lightweight. Even with paragliders, however, executing the B-line stall is a radical and delicate maneuver. Because the wing has lost a lot internal pressurization, it could exhibit violent behavior.

When turning to the use of parachutes deployed from high altitude with a jumper and/or a payload, the B-line stall and the "big ears" techniques are impractical and not effective, particularly in connection with parachutes that are designed for military operations carrying heavily loaded jumpers. When secured in a military parachute harness attached to a large heavy rucksack, the jumper has little ability to shift his or her weight in order to change direction. As a result, the maneuverability is limited.

Further, in a military operation, a ram air parachute with a high glide ratio that cannot be rapidly altered can compromise the mission. For example, if the jumper is part of an operational military mission and arrives over the target with significant excess altitude, the jumper is forced to loiter in the air for an extended period of time, repeatedly circling over the target. This protracted time above the landing zone can result in the jumper becoming a target for the enemy. The ability to lose altitude rapidly on demand, while maintaining effective control of the heading, becomes increasingly important in the field of high performance ram air parachutes for personnel and cargo as deployed by the military.

FR 2731202 discloses a parachute sail double surface that has a wing span reduced by folding, in flight, one or more cavities onto themselves by a system of halyards and internal pulleys. The halyards and pulleys are fastened on the inter-cavity partitions to form a reduction zone. The anchoring point of one partition has an eyelet for fixing the halyard ends which then pass through holes in reduction zone partitions to join on to the pulleys.

US 3524613 discloses a self-inflating gliding wing which is provided with suspension lines of substantially uniform length in a direction transversely of the wing whereby the wing is given a transversely arched contour. The leading edge of the wing embodies upper and lower members which during flight form a ram air scoop that is substantially closed at the rear along a line spaced from the leading edge so as to maintain the leading edge extended during flight.

Therefore, a need exists for a system and method for modulating the glide path of a personnel or cargo-laden ram air parachute so that the rate of descent may be rapidly increased and forward speed reduced, while the effectiveness of the steering lines to control parachute heading is retained.

### SUMMARY OF THE INVENTION

In view of the foregoing, the present invention is directed to a personnel or cargo ram air gliding parachute as claimed in claim 1, and a method of modulating the glide slope as claimed in claim 8. The parachute is equipped with a device or system that can be activated during flight to shorten only centrally positioned suspension lines located on the B line row, generally close to the center of pressure of the airfoil, in order to distort the center section of the canopy while the wingtips remain extended and pressurized so that the steering system remains fully functional to control the heading.

According to a preferred embodiment, the system includes a modulating line connected only to the centermost B line on each side of the canopy. The jumper, or an automated system, pulls down on the modulating lines when the glide ratio must be reduced, with the resulting distortion of just the center section of the parachute canopy reducing the forward speed and increasing the rate of descent while retaining the functionality of the trailing edge steering control system.

Accordingly, it is an object of the present invention to provide a personnel or cargo ram air parachute with a device that is activated during flight to shorten judiciously selected lines located on the B line row (generally close to the center of pressure of the airfoil) in the center of the canopy in order to distort only the center section, resulting in an increased rate of descent and reduced forward speed, while the canopy retains internal pressurization.

Another object of the present invention is to provide a personnel or cargo ram air parachute with a device in accordance with the preceding object that allows for gradual or immediate shortening of the selected lines in the B row (generally close to the center of pressure of the airfoil for dynamically controlled modulation of the glide path.

A further object of the present invention is to provide a personnel or cargo ram air parachute with a device in accordance with the preceding objects that allows for glide path modulation while maintaining full steering capability.

Further aspects of the invention are defined according to the appended dependent claims.

These together with other objects and advantages which will become subsequently apparent reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 shows a cross-sectional chordwise view of a conventional paraglider having a plurality of suspension lines located along five rows A-E, as well as steering lines and risers used to group the suspension lines.
Figure 2 shows the paraglider of Figure 1 after the airfoil section has been distorted by pulling on the B riser connected to the B lines across the entire span of the canopy to effect a B-line stall.

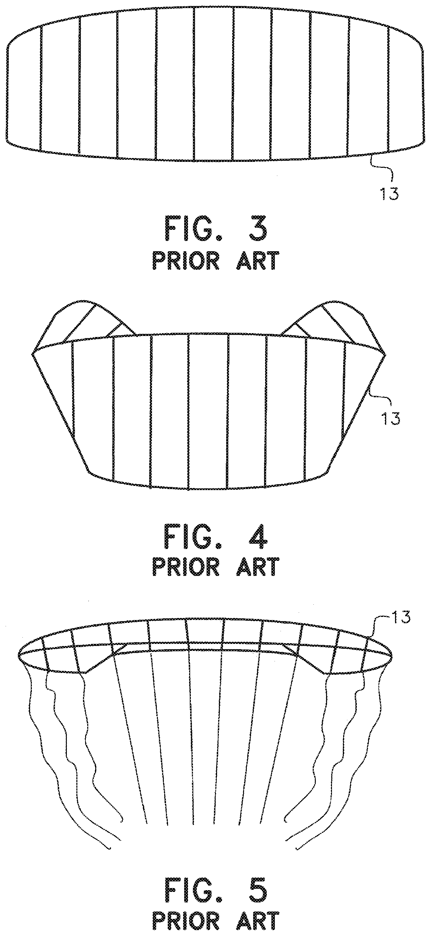

Figure 3 is a top view of a conventional paraglider canopy or wing during nominal flight.
Figure 4 is a top view of the wing shown in Figure 3 when in a "big ears" configuration is initiated with the wing tips pulled down as is known in the sport of paragliding.
Figure 5 is a front view of the "big ears" configuration shown in Figure 4.

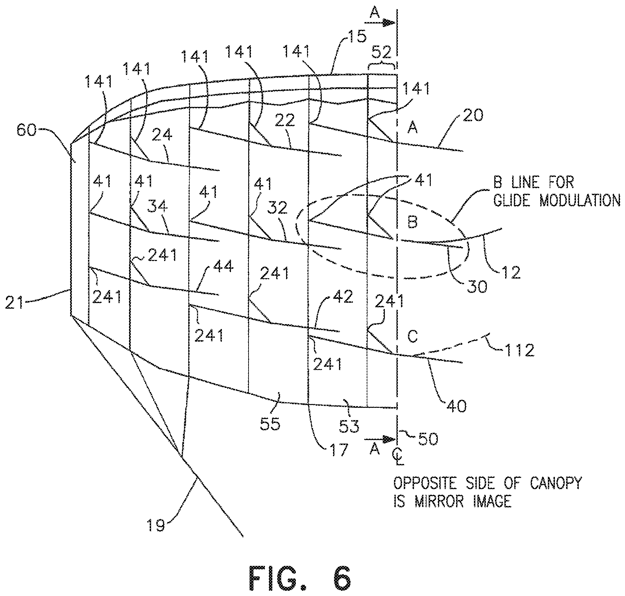

Figure 6 is a bottom view of a one-half side of a ram air parachute having a modulating line connected to the centrally located B lines in accordance with the present invention.

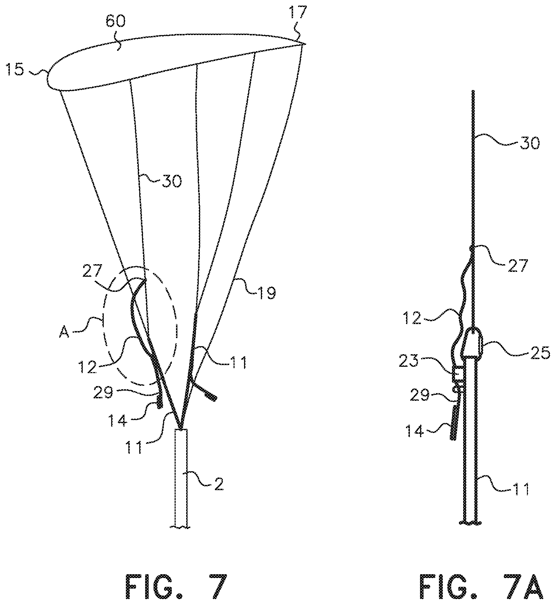

Figure 7 shows a chordwise view of a ram air parachute at line 50 of Figure 6, in the direction indicated by A-A, having a modulating line and only two risers per side, and shown before the modulating line is pulled down, in accordance with the present invention.
Figure 7A is an enlarged view of Detail A shown in Figure 7.

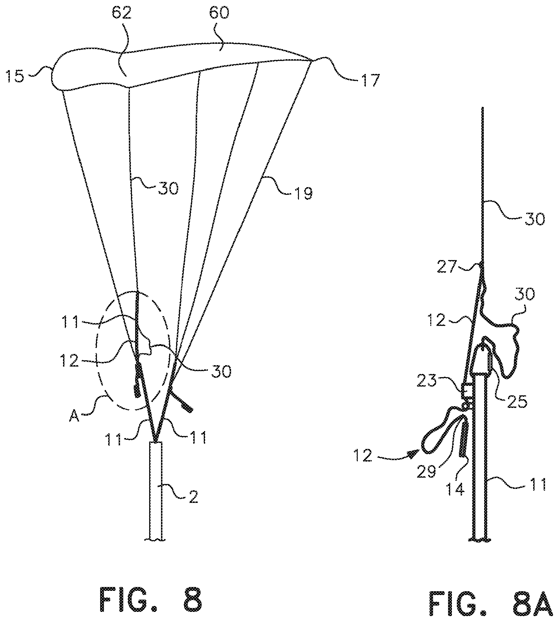

Figure 8 shows the chordwise view of the ram air parachute shown in Figure 7 with the modulating line pulled down and the center section of the canopy distorted, in accordance with the present invention.
Figure 8A is an enlarged view of Detail A shown in Figure 8.

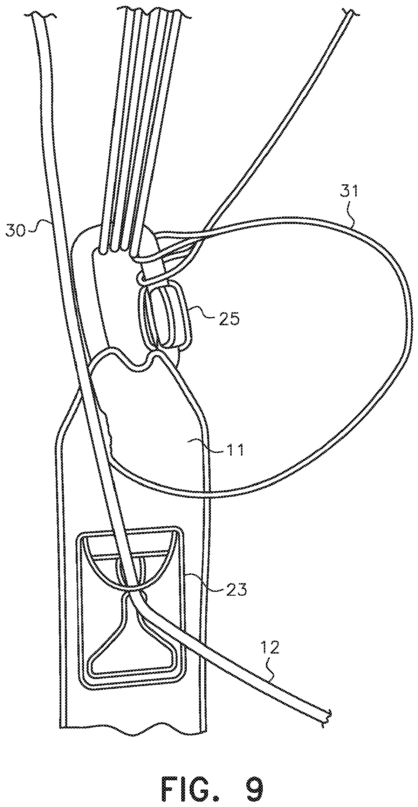

Figure 9 is an enlarged view of the modulating line engaged in the cleat shown in Figures 8 and 8A which is used to lock the modulating line in a pulled down configuration to set the parachute in the rapid descent (low glide ratio) configuration according to the present invention.

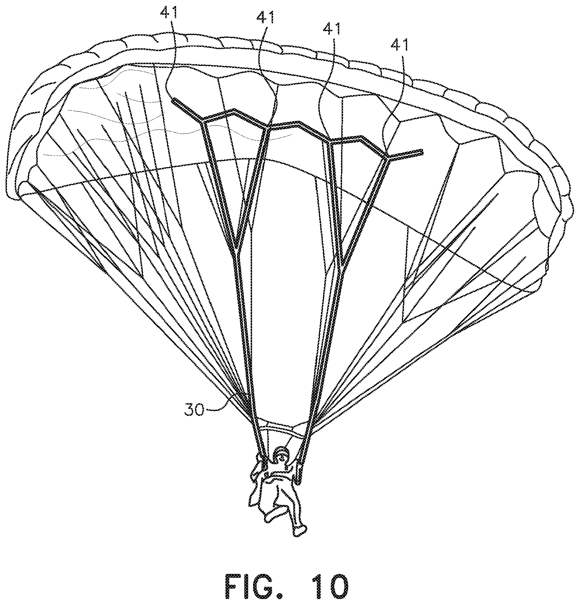

Figure 10 is a front perspective view of a parachute with the center B lines pulled down to distort the center part of the canopy in accordance with the present invention.

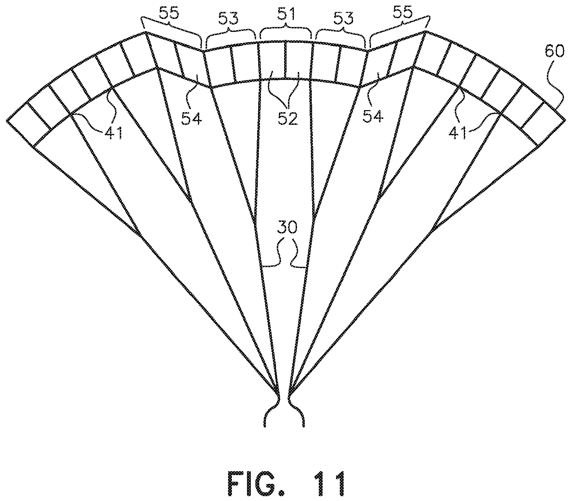

Figure 11 is a front cross-sectional view taken along the B suspension line of the parachute shown in Figure 10.

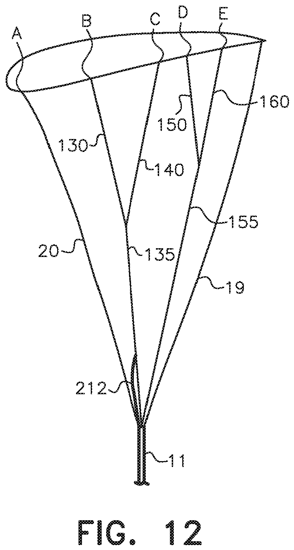

Figure 12 is chordwise view of a ram air parachute with the suspension lines cascaded chordwise rather than spanwise.

### DETAILED DESCRIPTION OF THE PREFERRED EMBODIMENTS

Although only one preferred embodiment of the invention is explained in detail, it is to be understood that the embodiment is given by way of illustration only. It is not intended that the invention be limited in its scope to the details of construction and arrangement of components set forth in the following description or illustrated in the drawings. Also, in describing the preferred embodiments, specific terminology will be resorted to for the sake of clarity. It is to be understood that each specific term includes all technical equivalents which operate in a similar manner to accomplish a similar purpose, insofar as remains within the literal definition according to the appended claims.

As shown in Figure 6, which is a view of a one-half side of the bottom surface of a ram air parachute, the present invention is directed to a ram air parachute having a plurality of suspension lines ordered in lines that extend span-wise across the canopy 60 and generally parallel with one another from adjacent the leading edge 15 to the trailing edge 17. For ease of illustration of the suspension lines, Figure 6 shows only the A lines, the B lines, the C lines and the trailing edge steering lines 19 on a one-half side of the parachute canopy 60. The opposite side of the parachute (not shown) is a mirror image of the side shown in Figure 6. As known to those skilled in the art, there may be suspension lines in addition to the A, B and C lines, such as D lines, E lines, etc. on larger sized canopies.

This invention is directed to personnel and cargo ram air parachutes for which the lower parts of some suspension lines are cascaded spanwise into a plurality of upper suspension lines that are attached to the bottom surface of the canopy as shown in Figure 6. While the lower part of the suspension line generally cascades into two or more upper suspension lines as shown, the suspension line can also be continuous and directly attach to the bottom surface of the canopy. In the case of large cargo ram air parachutes, such as those having a carrying capacity of greater than 907 kg (2000 lb), the suspension lines typically cascade and it might be necessary to pull on more than one B line on each side of the canopy center cell in order to achieve the desired glide modulation. In general, efficient glide modulation is achieved when the center portion comprising approximately 30% of the span is distorted.

With respect to the terms "B line" and "B suspension line" as used herein, these terms are intended to refer to the entire length of the suspension line from the canopy to the riser with the understanding that the "B line" or "B suspension line" is a single line at its lower end portion which joins the riser and may be either a single line at its opposite upper end portion that is attached to the canopy or, more commonly in the case of large ram air parachutes, several upper end lines that cascade from the single lower end portion of the line to attach to the canopy at multiple attachment points 41 (see also Figures 10 and 11) . In Figure 6, the centermost B line 30 cascades into two attachment points 41, each of the A lines cascades into two attachment points 141, and so on with respect to the C lines. Hence, reference to the B suspension line as a "line" is intended to include both a direct single "line" attachment and the multiple attachment point configuration that results from multiple lines cascading near the top of the "B line" or "B suspension line" that is only one line upon reaching the riser.

As shown, the A lines extend laterally across the span of the canopy between the wing tips and are connected to the canopy 60 nearest the leading edge 15. The A lines include an inner line 20, an outer line 24 and a middle line 22 spaced from and between the inner line 20 and the outer line 24, each of the A lines 20, 22 and 24 having two attachment points 141. Similarly, the B lines include an inner line 30, an outer line 34 and a middle line 32 spaced from and between the inner line 30 and the outer line 34, with each of the B lines 30, 32 and 34 having two attachment points 41, and the C lines include an inner line 40, an outer line 44 and a middle line 42 spaced from and between the inner line 40 and the outer line 44, each of the C lines also having two attachment points 241. Again, there may be more than three lines in each of the A, B and C rows in large span canopies.

As shown in Figure 6, the B lines are spaced rearwardly from the A lines, and the C lines are spaced rearwardly from the B lines. The inner B lines 30 are shown cascading for attachment on either side of the center cell 51 (see Figure 11) of the canopy; only a half cell 52 of the center cell 51 is shown in Figure 6. The half cell 52, the adjoining cell 53 and a half cell 54 of the next adjoining cell 55 (see Figure 11) are distorted when the modulating line 12 is pulled down as illustrated in Figure 6. A steering line 19 is attached at or near the trailing edge 17 of the canopy 60 adjacent the wing tip 21. The inner B line 30 on each side of the center cell is the only B line used for glide modulation of the parachute in accordance with the present invention, enabling the system to be readily implemented. As the opposite side (not illustrated) of the one-half canopy shown in Figure 6 is a mirror image, it is evident that there are two modulating lines, one on each of the centermost B lines 30 on either side of the center cell 51 of the parachute. However, if the B lines are not cascaded, i.e., if the lower end of the single B suspension line on each side of the canopy that is pulled down to modulate the glide slope does not cascade into several upper lines that are attached to the underside of the canopy but is attached at a single point as a "direct" line, the direct line on each side of the canopy center cell along the B row may be used.

In a preferred embodiment shown in Figures 7 and 8, the parachute suspension lines are connected, such as through a rapid link 25 (well known in the art), to only two risers 11 on each side. For clarity, Figures 7 and 8 show only one side of the parachute as taken at line 50 in the direction indicated A-A. As already stated in connection with Figure 6, the side opposite the side illustrated in Figure 6 is a mirror image. The direction A-A toward the mirror image side is indicated in order to correspond with the leading and trailing edge orientation, i.e., leading edge to the left and trailing edge to the right, shown in Figures 7 and 8.

According to the present invention, a modulating component, embodied as an additional line and referred to herein as the modulating line 12, is provided in conjunction with the inner B line on each side of the canopy center cell. One end 27 of the modulating line 12 is connected by stitching or the like to the B line 30 and the other end 29 of the modulating line 12 is equipped with a toggle 14. In a preferred configuration, the length of the modulating line is between about 5% and about 10% of the total length of the B line as measured from the link to the canopy. The toggle on the end 29 can be grasped by the jumper to exert a downward pull on the modulating line. The full canopy view of Figure 10 and the cross sectional view of Figure 11 show the resulting distortion in the center of the canopy when the left and right B lines on either side of the center cell 51 are pulled down. According to a preferred embodiment, the B suspension lines are shortened by between about 5% and about 10% of their length when modulated. The terms "left" and "right" when used herein to refer to the B lines are intended to provide clarity with respect to the position of the B lines as being on each side of the center cell. As would be understood, the terms "left" and "right" are relative and not absolute, as the "left" side of the canopy when viewed from the leading edge would, of course, be the "right" side when the same canopy is viewed from the trailing edge.

As shown in the chordwise canopy view of Figure 7 and enlarged Detail A shown in 7A, when the modulating line is not being used and the parachute is flying with the canopy fully open, there is slack in the modulating line 12 while the B line 30 is taut. To reduce the glide slope ratio, the toggle 14 attached to the end 29 of the modulating line 12 is pulled downwardly which, in turn, tightens the modulating line so that the attached end 27 pulls down on the B line. The downward pull on the B line distorts a center section 62 of the canopy 60 while creating slack in the B line as shown in Figures 8, 8A and 9. The distortion of the center section 62 of the canopy 60 serves to modulate the glide ratio of the parachute by reducing forward speed and increasing the rate of descent while the steering lines 19 on both sides at the trailing edge 17 remain fully operational to control heading. In most cases, distortion of about 30% of the span provides good glide modulation.

After the modulating line 12 is pulled down to set the parachute in the rapid descent (low glide ratio) configuration, the modulating line 12 can be locked in a securing element, such as a small cleat 23 located on the front of the riser 11 as shown in Figures 7A, 8A and 9. Figure 9 shows the B line 30 after being pulled down by the modulating line 12, with the modulating line having been secured in the cleat 23. As shown by the loop 31 in Figure 9, there is slack in the B line 30 when the modulating line 12 has been pulled down to modulate the glide slope. Alternatively, the jumper has the option to keep the toggle 14 of the line 12 in hand and manually modulate the glide slope as necessary. Other mechanisms beside the toggle 14 and cleat 23 can be used to set or fix the modulating line 12 in the pulled-down configuration to maintain the distortion in the center of the canopy through tension on the inner B lines.

In addition to use of the modulating line after deployment as has been described, the ram air parachute may be configured such that the modulating line is pulled down and secured during the parachute packing phase in order to deploy the parachute in a low glide ratio mode. When so configured, the glide modulation line is released after deployment to allow the parachute to fly at its maximum glide ratio capability. Once the glide modulation line is released, such line may thereafter be again pulled down to modulate the glide ratio during flight in the same manner as a parachute configured to be deployed without initial distortion of the center of the canopy.

As has been described herein, the present invention is directed to a system, device and method that consists of pulling only the left and right B lines in the center section 62 of the canopy 60 where the chord is the longest as shown in the perspective view of Figure 10 and the cross-sectional front view of Figure 11 taken along the B suspension line. The centrally located B lines, one on each of the left and right sides of the canopy, are used because the B line attachment points to the canopy are generally located closest to the center of pressure of the airfoil.

Figure 11 shows both the cells and division of the cells into so-called half cells across the span of the canopy 60. When the modulating lines (not shown in Figures 10 and 11) attached to the centermost B suspension lines 30 are pulled down, the resulting distortion of the center cell 51, the adjoining cells 53 and the half cells 54 of the next adjoining cells 55 reduces the lift and increases the drag in the center of the canopy. Based on the current state of development and testing of the present invention, good glide modulation of the parachute is achieved when about 30% of the span is distorted in the center section 62. However, the entire canopy retains its internal pressurization so that the left and right outboard cells are unaffected by this maneuver and the steering lines 19 at the canopy trailing edge 17 remain fully functional, allowing full steering control in a conventional manner and eliminating any need for the jumper to rely on weight shifting in the harness in an effort to steer the parachute.

In the tested configuration of a parachute equipped with the glide modulation system according to the present invention, the glide ratio was easily reduced from 5.5:1 to approximately 1:1 by the system and method of the present invention. The glide modulation can be achieved gradually or directly from the maximum to the lowest glide ratio.

While the invention has been described herein with reference to attaching the modulating lines to only the B-lines nearest the center of the canopy, in the case of larger canopies it may be advantageous to pull on more of the B-lines, while staying in the center portion of the canopy. For example, in the case of a ram air parachute having 11 cells, the B-lines on four line attachment points 41 (two on each side) may be pulled by the modulating lines as shown in Figure 10. With a ram air parachute having 31 cells, six line attachment points on each side of the canopy center may need to be pulled in order to distort a sufficiently large part of the center portion of the canopy.

The present invention is also applicable to precision guided aerial delivery. The Airborne Guidance Unit (AGU) is equipped with an actuator connected to the B lines to modulate the glide while the original left and right actuators are utilized to steer the parachute left and right. It is also conceivable that the parachute could be steered with a single actuator and that the glide modulation could be effected with a dedicated actuator.

Once the glide modulation system is disengaged by the parachutist or by the AGU, the parachute will return to its original glide slope configuration.

In examples not forming part of the claimed invention, but which may be useful for understanding aspects thereof, it may be possible to modulate the glide slope by shortening only the centermost C suspension lines, rather than the centermost B lines in accordance with the present invention. A modulating line 112 attached to the centermost C row suspension line 40 is shown by the dotted line 112 in Figure 6. It is also possible to shorten both the centermost B lines and the centermost C lines by cascading the suspension lines chordwise. As shown in Figure 12, the innermost B suspension line 130 and the innermost C suspension line 140 cascade from the lower line 135 which joins the riser 11. Similarly, the D suspension line 150 and the E suspension line 160 cascade from the lower line 155. The modulating line 212 is attached to the line 135 and may be used to pull down on both the innermost B and C suspension lines at the same time. Whether the innermost B line only, the innermost C line only or the chordwise cascading B and C lines together are used depends upon the particular canopy's center of pressure. However, the preferred embodiment is to shorten one centrally located B line on each side of the canopy, as the B line attachment point to the canopy is generally located closer to the center of pressure of the airfoil.

The foregoing descriptions and drawings should be considered as illustrative only of the principles of the invention. The invention may be configured in a variety of shapes and sizes and is not limited by the dimensions of the preferred embodiment. Numerous applications of the present invention will readily occur to those skilled in the art. Therefore, it is not desired to limit the invention to the specific examples disclosed or the exact construction and operation shown and described. Rather, all suitable modifications and equivalents may be resorted to, insofar as falls within the scope of the invention as defined by the appended claims.

## Claims

1. A ram air gliding parachute for personnel or cargo, the ram air gliding parachute comprising:
a canopy (60);
a plurality of B lines extending across a span of said canopy, and a plurality of C lines extending across said span of said canopy and located rearwardly of said plurality of B lines with respect to a leading edge (15) of the parachute;
a steering apparatus (19) located at the trailing edge (17) of said canopy (60), said trailing edge steering apparatus configured to steer the parachute; and
a device (12) for modulating glide slope of the parachute;
said B lines include a first pair of B lines nearest a center section of said canopy (60) along said span, one of said first pair of B lines being attached to the canopy on either side of a center cell (51), and at least a second pair of B lines spaced outwardly from said first pair of B lines on either side of the canopy, said C lines including a first pair of C lines nearest a center section of said canopy along said span, one of said first pair of C lines being attached to the canopy on either side of the center cell, and at least a second pair of C lines spaced outwardly from said first pair of C lines;
**characterised in that**:
said device (12) for modulating glide slope is configured to be activated during flight to shorten only said first pair of B lines only in the center section of the canopy in order to distort only the center section of said canopy, said distortion of said canopy center section increasing the parachute's rate of descent and reducing the parachute's forward speed while said trailing edge steering apparatus (19) remains operative to steer said parachute when said canopy center section is distorted.

2. The parachute as set forth in claim 1, wherein said plurality of B lines include a third pair of B lines spaced outwardly from said second pair of B lines, said third pair of B lines being nearest a wing tip section (21) of said canopy relative to said first and second pairs of B lines.

3. The parachute as set forth in claim 1 or claim 2, wherein, for each side of the canopy, said device includes a modulating line (12) attached at one end (27) to one of the first pair of B lines and having an opposite end (29) that, when pulled down, pulls on the attached B line, the modulating lines on each side of the canopy distorting the center section of the canopy where the first pair of B lines is attached when the modulating lines are pulled down.

4. The parachute as set forth in claim 3, wherein the opposite end (29) of the modulating line is provided with a toggle (14).

5. The parachute as set forth in claim 3, wherein each of the first pair of B lines is attached at a lower end thereof to a riser (11), said riser having a cleat (23) mounted thereon to which the end of the modulating line opposite the attached end is secured when the modulating line has been pulled down to distort the canopy.

6. The parachute as set forth in claim 1, wherein the first pair of B lines includes a left B line and a right B line, said device including a left modulating line attached to the left B line and a right modulating line attached to the right B line on either side of the center cell of said ram air parachute, each of said modulating lines having an end opposite the attached end that is used by a jumper or an automated device in flight to pull down only the left and right B lines on either side of the center cell in the canopy center section to distort only the canopy center section and reduce a glide ratio of said parachute.

7. The parachute as set forth in claim 6, wherein the B lines are joined by a respective riser (11) on each side, said device further including a securing element (23) on each of the risers, the ends of the modulating lines that are pulled down being releasably coupled to said securing elements on said risers to prevent the modulating lines from unrestrained movement when not in use, said securing elements also being configured to secure and fix said ends of the modulating lines in a pulled-down position to retain distortion of the canopy center section in flight.

8. A method of modulating the glide slope of a personnel ram-air gliding parachute or a cargo ram-air gliding parachute, said parachute comprising:
a canopy (60), a trailing edge steering apparatus (19) located adjacent the wing tip sections (21) of said canopy for steering the parachute, a glide slope modulating device (12), a plurality of B lines extending across a span of said canopy, and a plurality of C lines extending across said span of said canopy and located rearwardly of said plurality of B lines with respect to a leading edge (15) of the parachute,
said B lines including
a first pair of B lines nearest a center section of said canopy along said span, one of said first pair of B lines being attached to the canopy on either side of a center cell (51), and at least a second pair of B lines spaced outwardly from said first pair of B lines on either side of the canopy, said C lines including a first pair of C lines nearest a center section of said canopy along said span, one of said first pair of C lines being attached to the canopy on either side of the center cell, and at least a second pair of C lines spaced outwardly from said first pair of C lines; and
**characterised in that** said method includes activating the glide slope modulating device (12) during flight to shorten only said first pair of B lines only in the center section of the canopy in order to distort only the center section of said canopy, said distortion of said canopy center section increasing the parachute's rate of descent and reducing the parachute's forward speed while, at the same time, said trailing edge steering apparatus remains operative to steer said parachute when said canopy center section is distorted.

9. The method as set forth in claim 8, wherein said first pair of B lines includes a left B line and a right B line on either side of the center cell, said glide slope modulating device (12) including a left modulating line attached at a first end (27) thereof to the left B line and having an opposite second end (29), and a right modulating line attached at a first end thereof to the right B line and having an opposite second end, said step of activating including pulling down on the second ends of said left and right modulating lines to pull the left and right B lines down through the attached first ends of the modulating lines and distort the canopy only in the center section.

10. The method as set forth in claim 9, wherein each of said left and right B lines is coupled to a respective riser (11) equipped with a securing element (23) on each side of the canopy (60), said method further comprising, on each side of the canopy and after pulling down on the modulating lines, securing the second ends of the left and right modulating lines to the respective securing element on the respective riser on each side while retaining tension on the modulating lines.

11. The method as set forth in claim 10, wherein said securing element is a cleat (23) on each riser, said step of securing including locking the modulating lines in said cleats, respectively.

12. The method as set forth in claim 10, wherein the ends of the modulating lines are secured to the securing elements (23) without tension when the parachute is packed, said device being activated during flight to shorten said left and right B lines in order to distort only said canopy center section and reduce the glide ratio in flight.

13. The method as set forth in claim 10, wherein the ends (29) of the modulating lines are secured to the securing elements (23) in a pulled-down configuration when the parachute is packed so that the parachute deploys in a low glide ratio mode, said modulating line ends being configured to be released in flight to allow the parachute to fly at its maximum glide ratio and to be resecured to the securing elements in the pulled-down configuration to return the parachute to the low glide ratio mode as needed.

## Patentansprüche

1. Stauluft-Gleitfallschirm für Personen oder Ladung, wobei der Stauluft-Gleitfallschirm umfasst:
eine Kappe (60);
mehrere B-Leinen, die sich über eine Spannweite der Kappe erstrecken, und mehrere C-Leinen, die sich über die Spannweite der Kappe erstrecken und sich, bezogen auf eine Vorderkante (15) des Fallschirms, hinter den mehreren B-Leinen befinden;
eine Steuereinrichtung (19), die sich an der Hinterkante (17) der Kappe (60) befindet, wobei die Hinterkanten-Steuereinrichtung konfiguriert ist, um den Fallschirm zu steuern; und
eine Vorrichtung (12) zur Regulierung des Gleitwinkels des Fallschirms;
wobei die B-Leinen ein erstes Paar B-Leinen, das einem Mittelbereich der Kappe (60) entlang der Spannweite am nächsten liegt, wobei an jeder Seite einer mittleren Zelle (51) eine Leine dieses ersten Paars B-Leinen befestigt ist, und wenigstens ein zweites Paar B-Leinen, an jeder Seite der Kappe vom ersten Paar B-Leinen nach außen hin beabstandet, umfassen, die C-Leinen ein erstes Paar C-Leinen, das einem Mittelbereich der Kappe entlang der Spannweite am nächsten liegt, wobei an jeder Seite der mittleren Zelle eine Leine dieses ersten Paars C-Leinen befestigt ist, und wenigstens ein zweites Paar C-Leinen, vom ersten Paar C-Leinen nach außen hin beabstandet, umfasst,
**dadurch gekennzeichnet, dass**:
die Vorrichtung (12) zur Regulierung des Gleitwinkels konfiguriert ist, um während des Flugs aktiviert zu werden, so dass nur das erste Paar B-Leinen nur im Mittelbereich der Kappe verkürzt wird, um nur den Mittelbereich der Kappe zu deformieren, wobei die Deformation des Kappenmittelbereichs die Sinkgeschwindigkeit des Fallschirms erhöht und die Vorwärtsgeschwindigkeit des Fallschirms verringert, während die Hinterkanten-Steuereinrichtung (19) funktionsfähig bleibt, um den Fallschirm zu steuern, wenn der Kappenmittelbereich deformiert ist.

2. Fallschirm wie in Anspruch 1 beschrieben, wobei die mehreren B-Leinen ein drittes Paar B-Leinen, vom zweiten Paar B-Leinen nach außen hin beabstandet, umfassen, wobei das dritte Paar B-Leinen einem Tragflächenspitzenbereich (21) der Kappe am nächsten ist, bezogen auf das erste und das zweite Paar B-Leinen.

3. Fallschirm wie in Anspruch 1 oder Anspruch 2 beschrieben, wobei für jede Seite der Kappe die Vorrichtung eine Regulierleine (12) umfasst, die an einem Ende (27) an eine Leine des ersten Paars B-Leinen befestigt ist und ein gegenüberliegendes Ende (29) besitzt, das, wenn es nach unten gezogen wird, an der befestigten B-Leine zieht, wobei die Regulierleinen an jeder Seite der Kappe den Mittelbereich der Kappe, an dem das erste Paar B-Leinen befestigt ist, deformieren, wenn die Regulierleinen nach unten gezogen werden.

4. Fallschirm wie in Anspruch 3 beschrieben, wobei das gegenüberliegende Ende (29) der Regulierleine mit einem Knebel (14) versehen ist.

5. Fallschirm wie in Anspruch 3 beschrieben, wobei jede Leine des ersten Paars B-Leinen an ihrem unteren Ende an einem Tragegurt (11) befestigt ist, wobei der Tragegurt eine daran angebrachte Klemme (23) besitzt, an die das Ende der Regulierleine gegenüber dem befestigten Ende befestigt wird, wenn die Regulierleine zur Deformierung der Kappe nach unten gezogen worden ist.

6. Fallschirm wie in Anspruch 1 beschrieben, wobei das erste Paar B-Leinen eine linke B-Leine und eine rechte B-Leine umfasst, die Vorrichtung eine linke Regulierleine, die an die linke B-Leine befestigt ist, und eine rechte Regulierleine, die an die rechte B-Leine befestigt ist, an beiden Seiten der mittleren Zelle des Stauluftfallschirms umfasst, jede der Regulierleinen ein dem befestigten Ende gegenüberliegendes Ende besitzt, das von einem Springer oder einer automatisierten Vorrichtung im Flug verwendet wird, um nur die linke und die rechte Leine an beiden Seiten der mittleren Zelle im Kappenmittelbereich nach unten zu ziehen, um nur den Kappenmittelbereich zu deformieren und eine Gleitleistung des Fallschirms zu verringern.

7. Fallschirm wie in Anspruch 6 beschrieben, wobei die B-Leinen durch einen zugehörigen Tragegurt (11) an beiden Seiten verbunden sind, jede Vorrichtung ferner ein Befestigungselement (23) an jedem der Spanngurte umfasst, die Enden der Regulierleinen, die nach unten gezogen werden, lösbar mit den Befestigungselementen an den Spanngurten verbunden sind, um zu verhindern, dass die Regulierleinen sich ungehindert bewegen, wenn sie nicht in Gebrauch sind, die Befestigungselemente auch konfiguriert sind, um die Enden der Regulierleinen in einer nach unten gezogenen Position zu befestigen und zu sichern, um eine Deformierung des Kappenmittelbereichs während des Flugs beizubehalten.

8. Verfahren zur Regulierung des Gleitwinkels eines Personen-Stauluft-Gleitfallschirms oder eines Ladungs-Stauluft-Gleitfallschirms, wobei der Fallschirm umfasst:
eine Kappe (60), eine Hinterkanten-Steuereinrichtung (19), die sich neben den Tragflächenspitzenbereichen (21) der Kappe befindet, zum Steuern des Fallschirms, eine Gleitwinkelregulierungsvorrichtung (12), mehrere B-Leinen, die sich über eine Spannweite der Kappe erstrecken, und mehrere C-Leinen, die sich über die Spannweite der Kappe erstrecken und sich, bezogen auf eine Vorderkante (15) des Fallschirms, hinter den mehreren B-Leinen befinden,
wobei die B-Leinen ein erstes Paar B-Leinen, das einem Mittelbereich der Kappe entlang der Spannweite am nächsten liegt, wobei an jeder Seite einer mittleren Zelle (51) eine Leine dieses ersten Paars B-Leinen befestigt ist, und wenigstens ein zweites Paar B-Leinen, an jeder Seite der Kappe vom ersten Paar B-Leinen nach außen hin beabstandet, umfassen, die C-Leinen ein erstes Paar C-Leinen, das einem Mittelbereich der Kappe entlang der Spannweite am nächsten liegt, wobei an jede Seite der mittleren Zelle eine Leine dieses ersten Paars C-Leinen befestigt ist, und wenigstens ein zweites Paar C-Leinen, vom ersten Paar C-Leinen nach außen hin beabstandet, umfasst, und
**dadurch gekennzeichnet, dass** das Verfahren die Aktivierung der Gleitwinkelregulierungsvorrichtung (12) während des Flugs umfasst, so dass nur das erste Paar B-Leinen nur im Mittelbereich der Kappe verkürzt wird, um nur den Mittelbereich der Kappe zu deformieren, wobei die Deformation des Kappenmittelbereichs die Sinkgeschwindigkeit des Fallschirms erhöht und die Vorwärtsgeschwindigkeit des Fallschirms verringert, während gleichzeitig die Hinterkanten-Steuereinrichtung funktionsfähig bleibt, um den Fallschirm zu steuern, wenn der Kappenmittelbereich deformiert ist.

9. Verfahren wie in Anspruch 8 beschrieben, wobei das erste Paar B-Leinen eine linke B-Leine und eine rechte B-Leine an beiden Seiten der mittleren Zelle umfasst, die Gleitwinkelregulierungsvorrichtung (12) eine linke Regulierleine, die an einem ersten Ende (27) an der linken B-Leine befestigt ist und ein gegenüberliegendes zweites Ende (29) besitzt, und eine rechte Regulierleine, die an einem ersten Ende an der rechten B-Leine befestigt ist und ein gegenüberliegendes zweites Ende besitzt, umfasst, wobei der Schritt des Aktivierens das Ziehen an den zweiten Enden der linken und der rechten Regulierleine nach unten umfasst, um die durch die befestigten ersten Enden der Regulierleinen die linke und die rechte B-Leine nach unten zu ziehen und die Kappe nur im Mittelbereich zu deformieren.

10. Verfahren wie in Anspruch 9 beschrieben, wobei jede der linken und rechten B-Leinen mit einem zugehörigen Tragegurt (11), der mit einem Befestigungselement (23) ausgestattet ist, an jeder Seite der Kappe (60) verbunden ist, wobei das Verfahren ferner, an jeder Seite der Kappe und nach dem Ziehen an den Regulierleinen nach unten, das Befestigen der zweiten Enden der linken und rechten Regulierleinen am zugehörigen Befestigungselement am zugehörigen Tragegurt an jeder Seite umfasst, während die Spannung an den Regulierleinen aufrechterhalten wird.

11. Verfahren wie in Anspruch 10 beschrieben, wobei das Befestigungselement eine Klemme (23) an jedem Tragegurt ist und der Schritt des Befestigens das Feststellen der Regulierleinen in den jeweiligen Klemmen umfasst.

12. Verfahren wie in Anspruch 10 beschrieben, wobei die Enden der Regulierleinen an den Befestigungselementen (23) ohne Spannung befestigt werden, wenn der Fallschirm gepackt wird, wobei die Vorrichtung während des Flugs aktiviert wird, um die linken und rechten B-Leinen zu verkürzen, um nur den Kappenmittelbereich zu deformieren und die Gleitleistung während des Flugs zu verringern.

13. Verfahren wie in Anspruch 10 beschrieben, wobei die Enden (29) der Regulierleinen in einer nach unten gezogenen Konfiguration an den Befestigungselementen (23) befestigt werden, wenn der Fallschirm gepackt wird, so dass der Fallschirm in einem niedrigen Gleitleistungsmodus geöffnet wird, wobei die Regulierleinenenden konfiguriert sind, um, je nach Bedarf, im Flug gelöst zu werden, um zu ermöglichen, dass der Fallschirm mit seiner maximalen Gleitleistung fliegt, und um wieder an den Befestigungselementen in der nach unten gezogenen Konfiguration befestigt zu werden, um den Fallschirm wieder in den niedrigen Gleitleistungsmodus zu bringen.

## Revendications

1. Parachute planant rectangulaire pour personnel ou une cargaison, le parachute planant rectangulaire comprenant :
une voilure (60) ;
une pluralité de B s'étendant sur une envergure de ladite voilure, et une pluralité de C s'étendant sur ladite envergure de ladite voilure et situés vers l'arrière de ladite pluralité de B par rapport à un bord d'attaque (15) du parachute ;
un appareil de direction (19) situé au niveau du bord de fuite (17) de ladite voilure (60), ledit appareil de direction de bord de fuite étant configuré pour diriger le parachute ; et
un dispositif (12) pour moduler une pente de vol plané du parachute ;
lesdits B comportent une première paire de B au plus près d'une section de centre de ladite voilure (60) le long de ladite envergure, l'un de ladite première paire de B étant fixé à la voilure de part et d'autre d'une cellule de centre (51), et au moins une deuxième paire de B espacés vers l'extérieur de ladite première paire de B de part et d'autre de la voilure, lesdits C comportant une première paire de C au plus près d'une section de centre de ladite voilure le long de ladite envergure, l'un de ladite première paire de C étant fixé à la voilure de part et d'autre de la cellule de centre, et au moins une seconde paire de C espacés vers l'extérieur de ladite première paire de C ;
**caractérisé en ce que** :
ledit dispositif (12) pour moduler une pente de vol plané est configuré pour être activé pendant un vol pour raccourcir uniquement ladite première paire de B uniquement dans la section de centre de la voilure afin de distordre uniquement la section de centre de ladite voilure, ladite distorsion de ladite section de centre de voilure augmentant la vitesse de chute du parachute et réduisant la vitesse d'avancement du parachute tandis que ledit appareil de direction (19) de bord de fuite demeure opérationnel pour diriger ledit parachute lorsque ladite section de centre de voilure est distordue.

2. Parachute selon la revendication 1, dans lequel ladite pluralité de B comportent une troisième paire de B espacés vers l'extérieur de ladite deuxième paire de B, ladite troisième paire de B étant au plus près d'une section de bout d'aile (21) de ladite voilure par rapport auxdites première et deuxième paires de B.

3. Parachute selon la revendication 1 ou la revendication 2, dans lequel, pour chaque côté de la voilure, ledit dispositif comporte une ligne modulatrice (12) fixée au niveau d'une extrémité (27) à l'un de la première paire de B et ayant une extrémité opposée (29) qui, lorsqu'elle est tirée vers le bas, tire sur le B fixé, les lignes modulatrices de part et d'autre de la voilure distordant la section de centre de la voilure où la première paire de B est fixée lorsque les lignes modulatrices sont tirées vers le bas.

4. Parachute selon la revendication 3, dans lequel l'extrémité opposée (29) de la ligne modulatrice est pourvue d'un cabillot (14).

5. Parachute selon la revendication 3, dans lequel chacun de la première paire de B est fixé au niveau d'une extrémité inférieure de ceux-ci à un élévateur (11), ledit élévateur ayant un taquet (23) monté dessus auquel est arrimée l'extrémité de la ligne modulatrice opposée à l'extrémité fixée lorsque la ligne modulatrice a été tirée vers le bas pour distordre la voilure.

6. Parachute selon la revendication 1, dans lequel la première paire de B comporte un B gauche et un B droit, ledit dispositif comportant une ligne modulatrice gauche fixée au B gauche et une ligne modulatrice droite fixée au B droit de part et d'autre de la cellule de centre dudit parachute rectangulaire, chacune desdites lignes modulatrices ayant une extrémité opposée à l'extrémité fixée qui est utilisée par un parachutiste ou un dispositif automatisé en vol pour tirer vers le bas uniquement les B gauche et droit de part et d'autre de la cellule de centre dans la section de centre de voilure pour distordre uniquement la section de centre de voilure et réduire une finesse dudit parachute.

7. Parachute selon la revendication 6, dans lequel les B sont joints par un élévateur (11) respectif de chaque côté, ledit dispositif comportant en outre un élément d'arrimage (23) sur chacun des élévateurs, les extrémités des lignes modulatrices qui sont tirées vers le bas étant couplées de façon libérable auxdits éléments d'arrimage sur lesdits élévateurs pour empêcher les lignes modulatrices d'effectuer un mouvement non contraint lorsqu'elles ne sont pas en utilisation, lesdits éléments d'arrimage étant également configurés pour arrimer et assujettir lesdites extrémités des lignes modulatrices dans une position tirée vers le bas pour retenir une distorsion de la section de centre de voilure en vol.

8. Procédé de modulation de la pente de vol plané d'un parachute planant rectangulaire pour personnel ou d'un parachute planant rectangulaire pour cargaison, ledit parachute comprenant :
une voilure (60), un appareil de direction (19) de bord de fuite situé adjacent aux sections de bout d'aile (21) de ladite voilure pour diriger le parachute, un dispositif modulant la pente de vol plané (12), une pluralité de B s'étendant sur une envergure de ladite voilure, et une pluralité de C s'étendant sur ladite envergure de ladite voilure et situés vers l'arrière de ladite pluralité de B par rapport à un bord d'attaque (15) du parachute,
lesdits B comportant une première paire de B au plus près d'une section de centre de ladite voilure le long de ladite envergure, l'un de ladite première paire de B étant fixé à la voilure de part et d'autre d'une cellule de centre (51), et au moins une deuxième paire de B espacés vers l'extérieur de ladite première paire de B de part et d'autre de la voilure, lesdits C comportant une première paire de C au plus près d'une section de centre de ladite voilure le long de ladite envergure, l'un de ladite première paire de C étant fixés à la voilure de part et d'autre de la cellule de centre, et au moins une seconde paire de C espacés vers l'extérieur de ladite première paire de C ; et
**caractérisé en ce que** ledit procédé comporte
l'activation du dispositif modulant la pente de vol plané (12) pendant un vol pour raccourcir uniquement ladite première paire de B uniquement dans la section de centre de la voilure afin de distordre uniquement la section de centre de ladite voilure, ladite distorsion de ladite section de centre de voilure augmentant la vitesse de chute du parachute et réduisant la vitesse d'avancement du parachute tandis que, dans le même temps, ledit appareil de direction de bord de fuite demeure opérationnel pour diriger ledit parachute lorsque ladite section de centre de voilure est distordue.

9. Procédé selon la revendication 8, dans lequel ladite première paire de B comporte un B gauche et un B droit de part et d'autre de la cellule de centre, ledit dispositif modulant la pente de vol plané (12) comportant une ligne modulatrice gauche fixée au niveau d'une première extrémité (27) de celle-ci au B gauche et ayant une seconde extrémité opposée (29), et une ligne modulatrice droite fixée au niveau d'une première extrémité de celle-ci au B droit et ayant une seconde extrémité opposée, ladite étape d'activation incluant le fait de tirer vers le bas les secondes extrémités desdites lignes modulatrices gauche et droite pour tirer les B gauche et droit vers le bas par le biais des premières extrémités fixées des lignes modulatrices et distordre la voilure uniquement dans la section de centre.

10. Procédé selon la revendication 9, dans lequel chacun desdits B gauche et droit est couplé à un élévateur (11) respectif équipé d'un élément d'arrimage (23) de chaque côté de la voilure (60), ledit procédé comprenant en outre, de part et d'autre de la voilure et après avoir tiré vers le bas les lignes modulatrices, l'arrimage des secondes extrémités des lignes modulatrices gauche et droite à l'élément d'arrimage respectif sur l'élévateur respectif de chaque côté tout en retenant une tension sur les lignes modulatrices.

11. Procédé selon la revendication 10, dans lequel ledit élément d'arrimage est un taquet (23) sur chaque élévateur, ladite étape d'arrimage comportant le verrouillage des lignes modulatrices dans ledit taquet, respectivement.

12. Procédé selon la revendication 10, dans lequel les extrémités des lignes modulatrices sont arrimées aux éléments d'arrimage (23) sans tension lorsque le parachute est plié, ledit dispositif étant activé pendant un vol pour raccourcir lesdits B gauche et droit afin de distordre uniquement ladite section de centre de voilure et réduire la finesse en vol.

13. Procédé selon la revendication 10, dans lequel les extrémités (29) des lignes modulatrices sont arrimées aux éléments d'arrimage (23) dans une configuration tirée vers le bas lorsque le parachute est plié de sorte que le parachute se déploie dans un mode finesse basse, lesdites extrémités de ligne modulatrice étant configurées pour être libérées en vol pour permettre au parachute de voler à sa finesse maximale et d'être à nouveau arrimé aux éléments d'arrimage dans la configuration tirée vers le bas pour ramener le parachute dans le mode finesse basse le cas échéant.
